# EUROPEAN PATENT APPLICATION

(11) **EP 3 073 553 A1**
(43) Date of publication of application: **28.09.2016**
(21) Application number: 14863763.0
(22) Date of filing: 19.11.2014
(51) Int. Cl.: H01M 4/02, H01M 4/133, H01M 12/06

(54) **POSITIVE ELECTRODE FOR LITHIUM AIR BATTERY AND LITHIUM AIR BATTERY COMPRISING SAME**

(30) Priority: 19.11.2013 KR 20130140365
(71) Applicant: IUCF-HYU (Industry-University Cooperation Foundation Hanyang University), Seoul 133-791 (KR)
(72) Inventor: SUN, Yang-Kook, Seoul 135-280 (KR); PARK, Jin Bum, Seoul 133-110 (KR)
(74) Representative: Gulde & Partner
(86) International application number: PCT/KR2014/011148
(87) International publication number: WO 2015/076569

(57) **Abstract**

The present invention relates to a positive electrode for a lithium air battery and a lithium air battery comprising the same and, more specifically, to a positive electrode for a lithium air battery, the positive electrode containing oxygen as a positive electrode active material and comprising a gas diffusion electrode including a transition metal deposition layer formed on a surface; and to a lithium air battery comprising the same.

## Description

### [Technical Field]

The present invention relates to a positive electrode for a lithium-air battery and a lithium-air battery including the same.

### [Background Art]

Currently, lithium secondary batteries are getting much attention as a next-generation battery, but electric-powered cars equipped with a lithium secondary battery are disadvantageous in that the running distance for a single charge is too short to compete with engine-operated cars.

To solve the aforementioned problem of lithium batteries, lithium-air batteries have been actively researched recently. Lithium air batteries have a theoretical energy density of 3000 Wh/kg or more, which corresponds to about 10 times the energy density of lithium ion batteries. Also, lithium air batteries are environmentally friendly and can provide enhanced safety compared to lithium ion batteries.

Generally, in lithium air batteries, air is used as a positive electrode active material, and Li metal, which has an electric potential difference with air, an alloy thereof, or Li intercalated into carbon or the like is used as a negative electrode. In addition, there is also a case of using a metal forming a divalent ion, such as Zn, Mg, or Ca, a metal forming a trivalent ion, such as Al, or an alloy thereof as the negative electrode.

While a lithium-air battery is being discharged, the metal ions released from the negative electrode react with the air (oxygen) from the positive electrode side to generate a metal oxide. While the lithium-air battery is being charged, the generated metal oxide is reduced into a metal ion and air.

The main ingredient of an air electrode of a lithium-air battery is carbon, which serves as a venue in which a catalyst, oxygen, and lithium ions contact one another to react, and the air electrode includes an oxide that functions as a catalyst for an effective reduction of oxygen during discharge and an effective generation of oxygen from a metal oxide during charge.

Conventionally, in lithium-air batteries, the oxide was prepared in the form of particles and, along with a binder, was applied in the form of a slurry. However, in this case, there was a problem in that carbon reacted with Li₂O, which is a discharge intermediate, to reduce the charge/discharge efficiency.

### [Disclosure]

### [Technical Problem]

To solve the aforementioned problems of conventional art, the present invention is directed to providing a positive electrode for a lithium-air battery and a lithium-air battery including the same, wherein the positive electrode has a novel structure and contains a catalyst for the positive electrode for a lithium-air battery.

### [Technical Solution]

To solve the aforementioned problems, the present invention provides a positive electrode for a lithium-air battery, wherein oxygen is the positive electrode active material and the positive electrode includes a gas diffusion electrode selected from the group consisting of carbon cloth, carbon paper, carbon felt, and an oxygen selective permeable membrane; and a transition metal deposition layer formed on a surface of the gas diffusion electrode surface.

FIG. 1 schematically shows the structure of a lithium-air battery of the present invention. As shown in FIG. 1, in the lithium-air battery, an electrolyte 18 is interposed between a negative electrode 13, which is adjacent to a first collector 12 and is capable of occluding and releasing lithium ions, and a positive electrode 15, which uses the oxygen as an active material and is formed at a second collector 14. A lithium-ion-conductive solid electrolyte membrane 16 may be interposed between the negative electrode 13 and the positive electrode 15, and a separator (not shown) may be interposed between the solid electrolyte membrane 16 and the positive electrode 15.

In the positive electrode for a lithium-air battery of the present invention, the transition metal is any one selected from the group consisting of Co, Bi, In, Pb, Si, Ag, Sr, Ge, Zn, Sn, Cd, Tl, Hg, Mn, Cr, Ti, Ni, Cu, Ru, Pd, Ag, Au, Pt, and Ir.

In the positive electrode for a lithium-air battery of the present invention, the gas diffusion electrode possibly further contains a conductive material. In the positive electrode for the air battery of the present invention, the conductive material is a carbon-based material, examples of which include carbon black, graphite, graphene, an activated carbon, and a carbon fiber.

The positive electrode for the air battery of the present invention further contains an oxygen reduction/oxidation (redox) catalyst.

In addition, the present invention provides a lithium-air battery including the positive electrode of the present invention; a negative electrode capable of occluding and releasing lithium ions; and a non-aqueous electrolyte.

### [Advantageous Effects]

The positive electrode for a lithium-air battery of the present invention can improve a service-life characteristic by inhibiting a reaction with Li₂O, which is a discharge intermediate, by having a gas diffusion electrode including a transition metal layer deposited by an electrochemical method, and can increase the charge/discharge efficiency by improving electronic conductivity.

### [Description of Drawings]

FIG. 1 shows the structure of a lithium-air battery.
FIGS. 2 to 5 are the results of measuring a charge/discharge characteristic of lithium-air batteries, each including a transition metal deposition layer, prepared according to examples 1 to 4, respectively.

### [Modes of the Invention]

Hereinafter, the present invention will be described in further detail with reference to examples. However, the present invention is not limited by the following examples.

### <Example 1>

Carbon black (super P), which is a conductive material, and a polyvinylidene fluoride (PVDF) were mixed in a 80:20 weight ratio and were dispersed in N-methyl-2-pyrrolidone to prepare a composition for a positive electrode active material layer. The composition for the positive electrode active material layer was coated on carbon paper (TGP-H-030, Toray Industries, Inc.), which was a gas diffusion electrode, and then was dried to fabricate an electrode.

A cobalt solution was prepared by putting 40 g cobalt dichloride (CoCl₂) in 240 ml water.

The fabricated electrode was dipped in the cobalt solution, and then cobalt was deposited thereon by applying a 4 V voltage for 10 minutes to prepare a positive electrode. Lithium metal foil was used as a negative electrode.

A coin-cell-type lithium-air battery was fabricated by forming pores in the fabricated positive electrode for easy permeation of oxygen and using the negative electrode and a porous glass filter (Whatman™). A liquid electrolyte containing LiCF₃SO₃ dissolved at 1 M concentration in a tetraethylene glycol dimethyl ether solvent was injected between the positive electrode and the negative electrode to fabricate a lithium-air battery.

### <Example 2>

A lithium-air battery was fabricated in the same manner as in Example 1, except that the positive electrode was fabricated by applying a 3 V voltage for 3 minutes to deposit cobalt.

### <Example 3>

A lithium-air battery was fabricated in the same manner as in Example 1, except that the positive electrode was fabricated by preparing a silver solution using silver nitrate (AgNO₃) and then depositing silver metal.

### <Example 4>

A lithium-air battery was fabricated in the same manner as in Example 1, except that the positive electrode was fabricated by preparing a silver solution using AgNO₃ and then, unlike in the Example 1, directly depositing silver metal on carbon paper (TGP-H-030, Toray Industries, Inc.), which was a gas diffusion electrode.

### <Test Example 1: Assessment of electrochemical performance of lithium-air batteries>

The lithium-air batteries fabricated in Examples 1 to 4 were put in a chamber filled with oxygen, were subjected to a single 10-hour discharge and charge under current conditions of 2.0 to 4.5 V and 200 mA/g, and the results are shown in FIGS. 2 to 5, respectively.

### [Industrial Applicability]

The positive electrode for a lithium-air battery of the present invention can improve a service-life characteristic by inhibiting a reaction with Li₂O, which is a discharge intermediate, by having a gas diffusion electrode including a transition metal layer deposited by an electrochemical method, and can increase the charge/discharge efficiency by improving electronic conductivity.

## Claims

1. A positive electrode for a lithium-air battery using oxygen as a positive electrode active material, and comprising:
a gas diffusion electrode selected from the group consisting of carbon cloth, carbon paper, carbon felt, and an oxygen selective permeable membrane; and
a transition metal deposition layer formed on a surface of the gas diffusion electrode surface.

2. The positive electrode of claim 1, wherein the transition metal is one or more selected from the group consisting of Co, Bi, In, Pb, Si, Ag, Sr, Ge, Zn, Sn, Cd, Tl, Hg, Mn, Cr, Ti, Ni, Cu, Ru, Pd, Ag, Au, Pt, and Ir.

3. The positive electrode of claim 1, wherein the gas diffusion electrode further comprises a conductive material.

4. The positive electrode of claim 3, wherein the conductive material is a carbon-based material selected from the group consisting of carbon black, graphite, graphene, activated carbon, and carbon fibers.

5. The positive electrode of claim 1, wherein the positive electrode further comprises an oxygen reduction/oxidation (redox) catalyst.

6. A lithium-air battery comprising:
the positive electrode of claim 1;
a negative electrode that is capable of occluding or releasing lithium ions; and
a non-aqueous electrolyte.
